# EUROPEAN PATENT SPECIFICATION

(11) **EP 2 176 587 B1**
(45) Date of publication and mention of the grant of the patent: **25.05.2011**
(21) Application number: 08781947.0
(22) Date of filing: 17.07.2008
(51) Int. Cl.: F23C 3/00, F23D 14/06, F23D 14/10

(54) **A FLAMELESS COMBUSTION HEATER**
HEIZVORRICHTUNG ZUR FLAMMENLOSEN VERBRENNUNG
RÉCHAUFFEUR À COMBUSTION SANS FLAMME

(30) Priority: 20.07.2007 US 950943 P
(43) Date of publication of application: 21.04.2010
(73) Proprietor: Shell Internationale Research Maatschappij B.V., 2596 HR Den Haag (NL)
(72) Inventor: MUNSHI, Abdul Wahid, Houston, Texas 77099 (US); VEENSTRA, Peter, NL-1031 CM Amsterdam (NL); WORTHEN, Rachel Anna, Katy, Texas 77450 (US)
(74) Representative: Matthezing, Robert Maarten
(86) International application number: PCT/US2008/070281
(87) International publication number: WO 2009/014979

(56) References cited:
- WO-A-01/81239
- US-A- 5 255 742
- US-A- 5 404 952
- US-A- 5 433 271
- US-A1- 2002 015 670

## Description

### Field of the Invention

This invention relates to a flameless combustion heater and a method for providing heat to a process.

### Background of the Invention

Flameless combustion heaters are described in U.S. 7,025,940. The patent describes a process heater utilizing flameless combustion, which is accomplished by preheating a fuel and combustion air to a temperature above the auto-ignition temperature of the mixture. The fuel is introduced in relatively small increments over time through a plurality of orifices in a fuel gas conduit, which provide communication between the fuel gas conduit and an oxidation reaction chamber. As described in the patent, a process chamber is in heat exchange relationship with the oxidation reaction chamber.

Flameless combustion heaters provide several benefits over conventional fired heaters as described in the aforementioned patent. Flameless combustion heaters can, however, encounter problems related to the mixing of the fuel and oxidant in the oxidation reaction chamber.

Peak temperatures can occur near each opening in the fuel conduit, and this non-uniform heating causes non-uniform thermal expansion of the fuel conduit. Therefore, the fuel conduit has a tendency to bend, which bending positions the fuel conduit openings close to the wall of the oxidation reaction chamber and can result in hot spots that may lead to failure of the oxidation reaction chamber wall.

In addition, the fuel passing through the openings may exhibit a jet effect as it enters the oxidation reaction chamber. If the wall of the oxidation reaction chamber is too close to the opening then the fuel will impinge directly on the wall. This requires that a minimum distance be maintained between the outside of the fuel conduit and the inside of the oxidation reaction chamber.

### Summary of the Invention

The invention provides a flameless combustion heater comprising: an oxidation conduit and a fuel conduit having a plurality of centralizers attached to the external wall of the fuel conduit wherein at least one centralizer or portion of a centralizer is angled with respect to the longitudinal axis of the fuel conduit.

The invention also provides a method for providing heat to a process conduit comprising providing an oxidation conduit; providing a fuel conduit having a plurality of openings that provide fluid communication from within the fuel conduit to the oxidation conduit, and a plurality of centralizers attached to the fuel conduit wherein at least one centralizer or portion of a centralizer is angled with respect to the longitudinal axis of the fuel conduit; providing a process conduit in a heat exchange relationship with the oxidation conduit; introducing fuel into the fuel conduit; introducing an oxidant into the oxidation conduit; and introducing the fuel into the oxidation conduit through the plurality of openings such that flameless combustion occurs in the oxidation conduit.

### Brief Description of the Drawing

Fig. la depicts a two-tube flameless combustion heater with angled centralizers.

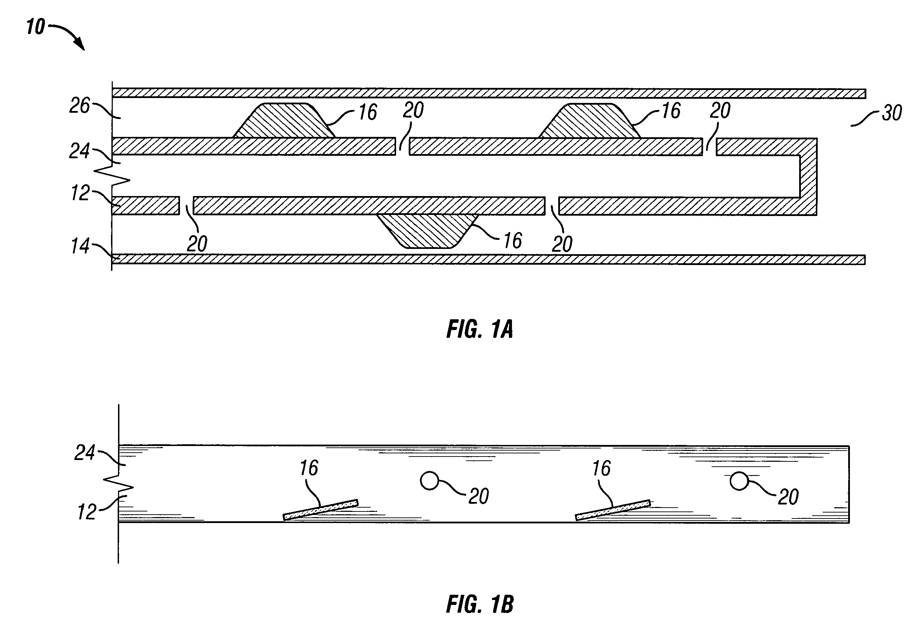

Fig. 1b depicts an external view of a fuel conduit with angled centralizers.

### Detailed Description of the Invention

The invention provides a flameless combustion heater that is used in the direct transfer of heat energy released by the flameless combustion of fuel. The heater has many possible uses and applications including heating underground formations and heating process streams. The flameless combustion heater is especially useful in conjunction with processes that carry out endothermic reactions, for example, dehydrogenation of alkylaromatic compounds and steam methane reforming. The invention provides a flameless combustion heater with an improved design of the centralizers attached to the external wall of the fuel conduit. The centralizers are protrusions attached to the external wall of the fuel conduit to prevent contact between the fuel conduit and the oxidation conduit.

The present invention addresses the aforementioned problems. The use of angled centralizers results in improved mixing of the fuel and air within the heater, reduces or eliminates peak temperatures and helps prevent fuel impingement on the inside of the oxidation conduit.

Flameless combustion in a heater can be accomplished by preheating an oxidant stream and a fuel stream sufficiently that when the two streams are combined the temperature of the mixture exceeds the auto-ignition temperature of the mixture, but the temperature of the mixture is less than a temperature that would result in the oxidation upon mixing being limited by the rate of mixing as described in U.S. 7,025,940. The auto ignition temperature of the mixture depends on the types of fuel and oxidant and the fuel/oxidant ratio. The auto ignition temperature of mixtures used in a flameless combustion heater may be in a range of from 850°C to 1400°C. The auto ignition temperature may be reduced if an oxidation catalyst is employed in the heater because this type of catalyst effectively lowers the auto-ignition temperature of the mixture.

The fuel conduit provides for the controlled rate of fuel introduction into an oxidation conduit in a manner so as to provide for a desired heat release. The heat release is determined in part by the location and number of openings, which can be tailored to each heater application. The heat release may be constant over the length of the heater, or it may be decreasing or increasing over the length of the heater.

Because there is no visible flame associated with flameless combustion of a fuel, the flameless combustion reaction occurs at a lower temperature than that observed in conventional fired heaters. Due to the lower temperatures observed, and the efficiency of direct heating, the heater may be designed using lower cost materials resulting in reduced capital expenditure.

The flameless combustion heater has two main elements: an oxidation conduit and a fuel conduit. The oxidation conduit may be a tube or pipe that has an inlet for oxidant, an outlet for oxidation products and a flow path between the inlet and outlet. Suitable oxidants include air, oxygen, and nitrous oxide. The oxidant that is introduced into the oxidation conduit may be preheated such that when mixed with fuel, the mixture is at a temperature above the auto-ignition temperature of the mixture. The oxidant may be heated externally to the flameless combustion heater. Alternatively, the oxidant may be heated inside the heater by heat exchange with any of the streams inside the heater. The oxidation conduit may have an internal diameter of from about 2 cm to about 20 cm. The oxidant conduit may however be larger or smaller than this range depending on the heater requirements.

The fuel conduit transports fuel into the heater and introduces it into the oxidation conduit. The fuel conduit may be a tube or pipe that has an inlet for fuel and a plurality of openings that provide fluid communication from within the fuel conduit to the oxidation conduit. The fuel conduit may be located within and surrounded by the oxidation conduit. The fuel passes through the openings and into the oxidation conduit where it mixes with the oxidant and results in flameless combustion. The fuel conduit may have an internal diameter of from about 1 cm to about 10 cm, preferably from about 1.5 cm to 5 cm. Depending on the design, however, the fuel conduit may have a diameter greater than 10 cm or less than 1 cm.

The openings can be drilled or cut into the wall of the fuel conduit. The wall of the fuel conduit typically has a thickness of from about 0.25 cm to about 2.5 cm. The openings may have cross sections that are circular, elliptical, rectangular, of another shape, or even irregularly shaped. The openings preferably have a circular cross-section.

The openings may have a cross-sectional area of from about 0.001 cm² to about 2 cm², preferably from about 0.03 cm² to about 0.2 cm². The size of the openings is determined by the desired rate of fuel introduction into the oxidation conduit, but openings that are too small may result in plugging. The openings may be located along the fuel conduit at a distance of from 1 cm to 100 cm in the axial direction from any other opening. The openings are preferably spaced from 15 cm to 50 cm apart in the axial direction. The openings may be positioned in their respective radial planes at different orientations along the length of the fuel conduit. For example, the position of the openings may alternate 180 degrees in the radial plane along the length of the fuel conduit, or they may alternate 120 degrees or 90 degrees. Therefore the position of the openings in the fuel conduit may be such that their orientation in the radial plane alternates along the length of the fuel conduit with their orientations separated by 30 degrees to 180 degrees. It is preferred for the radial orientation of the openings to alternate at from 60 degrees to 120 degrees along the length of the fuel conduit.

In one embodiment, a sintered plate may be used in addition to openings to provide fluid communication from the fuel conduit to the oxidation zone, and the openings in a sintered plate may have a diameter on the order of 10-100 microns.

Different openings along the length of the heater typically have the same cross-sectional area. In the alternative, the cross-sectional area of the openings may be different to provide a desired heat release. Additionally the spacing between openings along the fuel conduit may be different to provide a desired heat release. The openings are typically the same shape. In the alternative, the openings may be different shapes.

The orientation of the centralizers is important to the design and operation of the heater; and the centralizers may be angled to produce different temperature profiles and to overcome problems that arise due to the fluid and mixing dynamics of the heater system. Each centralizer has a proximal end, the end closest to the fuel inlet, and a distal end, the end farthest from the fuel inlet.

The centralizers may be triangular, rectangular, semicircular or any other shape. The centralizers may be made of or coated with a material that is softer than the material used for the oxidation conduit so the centralizers do not damage the oxidation conduit when the fuel conduit is installed or removed. For example, the centralizers may be made of a softer metal or a ceramic.

The fuel conduit has a longitudinal axis defined by the line connecting the centers of the cross-sections of the conduit. At least one of the centralizers is angled with respect to the longitudinal axis of the fuel conduit. The centralizer may be at any angle that is not parallel and not perpendicular to the longitudinal axis of the fuel conduit. A centralizer that is neither parallel nor perpendicular to the longitudinal axis of the fuel conduit is hereinafter referred to as an angled centralizer.

An angled centralizer may be angled such that the angle formed between the centralizer and the longitudinal axis of the fuel conduit is less than ninety degrees. An angled centralizer may be angled such that the angle formed between the centralizer and the longitudinal axis of the fuel conduit is less than sixty degrees or preferably less than forty-five degrees.

Positioning angled centralizers upstream (closer to the oxidant inlet) of a fuel conduit opening causes the oxidant to flow in a partially tangential direction as it passes the fuel conduit opening. This tangential flow component reduces the jet effect and minimizes the minimum distance required between the conduits. The partially tangential flow also contributes to improved mixing and a more even radial temperature profile. The heat is distributed more evenly around the circumference of the fuel conduit.

The angled centralizers may be straight or curved to provide desired flow characteristics of the oxidant in the oxidant conduit. A straight centralizer is one in which the centralizer is located in one geometric plane. A curved centralizer, on the other hand, has portions that are in at least two non-parallel geometric planes. If the centralizer is curved, a portion of the centralizer may be parallel to the longitudinal axis of the fuel conduit.

Figures 1a and 1b depict a flameless combustion heater (10) with angled centralizers (16) as described above. The heater (10) has a fuel conduit (12) and an oxidation conduit (19). This type of heater is referred to as a two-tube heater. Fuel conduit (12) is a cylindrical pipe that has an inlet (24) for fuel and a plurality of openings (20). The oxidation conduit (14) is a cylindrical pipe that has an inlet (26) for preheated oxidant and an outlet (30) for combustion products. In the alternative, the oxidant may enter at (30) and the combustion products may exit at (26). During operation, the fuel enters fuel conduit (12) via inlet (24) and then is mixed with oxidant in oxidation conduit (14) after it passes through the openings (20). Preferably, an angled centralizer (16) is positioned upstream (closer to the oxidant inlet) of each opening (20).

The flameless combustion heater may be operated at a variety of conditions depending on the particular configuration of heater and the heater application. Various examples and conditions are described in U.S. 5,255,742 and U.S. 7,025,940.

The flameless combustion heater may be used in an ethylbenzene dehydrogenation unit. A process feedstock containing steam and ethylbenzene is fed to the dehydrogenation reactor. The dehydrogenation reactor contains a suitable dehydrogenation catalyst, which may be an iron oxide based catalyst, and provides means for contacting the process feedstock with the dehydrogenation catalyst. A dehydrogenation reactor effluent is discharged from the dehydrogenation reactor and introduced into the flameless combustion heater. Because the dehydrogenation reaction is an endothermic reaction, the dehydrogenation reactor effluent will have a lower temperature than that of the process feedstock to the dehydrogenation reactor. The flameless combustion heater is used to heat the dehydrogenation reactor effluent before it is introduced into the second stage dehydrogenation reactor. A dehydrogenation reactor effluent is discharged from the second stage reactor. The dehydrogenation process may be carried out with more than two reactors in which case a flameless combustion heater may be placed in front of each additional reactor.

The flameless combustion heater described herein can be used in any application with any variation of the described details of centralizer orientation.

## Claims

1. A flameless combustion heater (10) comprising: an oxidation conduit (14) and a fuel conduit (12) having a plurality of centralizers (16) attached to the external wall of the fuel conduit (12) wherein at least one centralizer (16) or portion of a centralizer (16) is angled with respect to the longitudinal axis of the fuel conduit (12).

2. A heater (10) as claimed in claim 1 wherein the at least one centralizer (16) is angled less than ninety degrees with respect to the longitudinal axis of the fuel conduit (12).

3. A heater (10) as claimed in claim 1 wherein the at least one centralizer (16) is curved such that at least a portion of the centralizer (16) is angled with respect to the longitudinal axis of the fuel conduit (12).

4. A heater (16) as claimed in any of claims 1-3 wherein all or a majority of all of the centralizers (16) are angled with respect to the longitudinal axis of the fuel conduit (12).

5. A heater (10) as claimed in any of claims 1-4 wherein the centralizers (16) are made of a material different from that of the oxidation conduit (14) wall.

6. A heater (10) as claimed in any of claims 1-5 wherein the centralizers (16) are coated with a material different from that of the oxidation conduit (14) wall.

7. A heater (10) as claimed in any of claims 1-6 wherein the centralizer (16) is triangular shaped.

8. A method for providing heat to a process conduit comprising:
providing an oxidation conduit (14);
providing a fuel conduit (12) having a plurality of openings (20) that provide fluid communication from within the fuel conduit (12) to the oxidation conduit (14), and a plurality of centralizers (16) attached to the fuel conduit (12) wherein at least one centralizer (16) or portion of a centralizer (16) is angled with respect to the longitudinal axis of the fuel conduit (12);
providing a process conduit in a heat exchange relationship with the oxidation conduit (14);
introducing fuel into the fuel conduit (12);
introducing an oxidant into the oxidation conduit (14); and
introducing the fuel into the oxidation conduit (14) through the plurality of openings (20) such that flameless combustion occurs in the oxidation conduit (14).

## Patentansprüche

1. Heizvorrichtung (10) zur flammenlosen Verbrennung, umfassend: eine Oxidationsleitung (14) und eine Brennstoffleitung (12) mit mehreren Zentriervorrichtungen (16), die an der Außenwand der Brennstoffleitung (12) angebracht sind, wobei mindestens eine Zentriervorrichtung (16) oder ein Abschnitt einer Zentriervorrichtung (16) im Hinblick auf die Längsachse der Brennstoffleitung (12) winklig angeordnet ist.

2. Heizeinrichtung (10) nach Anspruch 1, wobei die mindestens eine Zentriervorrichtung (16) um weniger als 90 Grad im Hinblick auf die Längsachse der Brennstoffleitung (12) winklig angeordnet ist.

3. Heizeinrichtung (10) nach Anspruch 1, wobei die mindestens eine Zentriervorrichtung (16) derart gekrümmt ist, dass zumindest ein Abschnitt der Zentriervorrichtung (16) im Hinblick auf die Längsachse der Brennstoffleitung (12) winklig angeordnet ist.

4. Heizeinrichtung (10) nach einem der Ansprüche 1-3, wobei alle oder der Hauptteil der Zentriervorrichtungen (16) im Hinblick auf die Längsachse der Brennstoffleitung (12) winklig angeordnet sind.

5. Heizeinrichtung (10) nach einem der Ansprüche 1-4, wobei die Zentriervorrichtungen (16) aus einem Material hergestellt sind, das sich von dem der Wand der Oxidationsleitung (14) unterscheidet.

6. Heizeinrichtung (10) nach einem der Ansprüche 1-5, wobei die Zentriervorrichtungen (16) mit einem Material überzogen sind, das sich von dem der Wand der Oxidationsleitung (14) unterscheidet.

7. Heizeinrichtung (10) nach einem der Ansprüche 1-6, wobei die Zentriervorrichtung (10) eine dreieckige Form aufweist.

8. Verfahren zum Bereitstellen von Wärme für eine Prozessleitung, umfassend:
Vorsehen einer Oxidationsleitung (14);
Vorsehen einer Brennstoffleitung (12) mit mehreren Öffnungen (20), die eine Fluidverbindung des Inneren der Brennstoffleitung (12) mit der Oxidationsleitung (14) vorsehen, und von mehreren Zentriervorrichtungen (16), die an der Brennstoffleitung (12) angebracht sind, wobei mindestens eine Zentriervorrichtung (16) oder ein Abschnitt einer Zentriervorrichtung (16) im Hinblick auf die Längsachse der Brennstoffleitung (14) winklig angeordnet ist;
Vorsehen einer Prozessleitung in einer Wärmeaustauschbeziehung mit der Oxidationsleitung (14) ;
Einführen von Brennstoff in die Brennstoffleitung (12) ;
Einführen eines Oxidationsmittels in die Oxidationsleitung (14); und
Einführen des Brennstoffs in die Oxidationsleitung (14) durch die mehreren Öffnungen (20), so dass in der Oxidationsleitung (14) eine flammenlose Verbrennung auftritt.

## Revendications

1. Dispositif de chauffage à combustion sans flamme (10) comprenant un conduit d'oxydation (14) et un conduit de carburant (12) ayant une pluralité de centralisateurs (16) fixés à la paroi externe du conduit de carburant (12), dans lequel au moins un centralisateur (16) ou une portion d'un centralisateur (16) fait un angle avec l'axe longitudinal du conduit de carburant (12).

2. Dispositif de chauffage (10) selon la revendication 1, dans lequel le au moins un centralisateur (16) fait un angle de moins de quatre-vingt-dix degrés avec l'axe longitudinal du conduit de carburant (12).

3. Dispositif de chauffage (10) selon la revendication 1, dans lequel le au moins un centralisateur (16.) est incurvé de sorte qu'au moins une portion du centralisateur (16) fait un angle avec l'axe longitudinal du conduit de carburant (12).

4. Dispositif de chauffage (10) selon l'une quelconque des revendications 1 à 3, dans lequel l'ensemble ou la majeure partie de tous les centralisateurs (16) fait un angle avec l'axe longitudinal du conduit de carburant (12).

5. Dispositif de chauffage (10) selon l'une quelconque des revendications 1 à 4, dans lequel les centralisateurs (16) sont fabriqués dans un matériau différent de celui de la paroi du conduit d'oxydation (14).

6. Dispositif de chauffage (10) selon l'une quelconque des revendications 1 à 5, dans lequel les centralisateurs (16) sont revêtus d'un matériau différent de celui de la paroi du conduit d'oxydation (14).

7. Dispositif de chauffage (10) selon l'une quelconque des revendications 1 à 6, dans lequel le centralisateur (16) est de forme triangulaire.

8. Procédé pour fournir de la chaleur à un conduit de traitement, comprenant les étapes consistant à :
mettre en oeuvre un conduit d'oxydation (14) ;
mettre en oeuvre un conduit de carburant (12) ayant une pluralité d'ouvertures (20) qui assurent une communication de fluide de l'intérieur du conduit de carburant (12) au conduit d'oxydation (14) et une pluralité de centralisateurs (16) fixés au conduit de carburant (12), dans lequel au moins un centralisateur (16) ou une portion d'un centralisateur (16) fait un angle avec l'axe longitudinal du conduit de carburant (12) ;
mettre en oeuvre un conduit de traitement dans une relation d'échange de chaleur avec le conduit d'oxydation (14) ;
introduire du carburant dans le conduit de carburant (12) ;
introduire un oxydant dans le conduit d'oxydation (14) ; et
introduire le carburant dans le conduit d'oxydation (14) à travers la pluralité d'ouvertures (20) de sorte qu'une combustion sans flamme se produise dans le conduit d'oxydation (14).
